# EUROPEAN PATENT APPLICATION

(11) **EP 1 981 181 A1**
(43) Date of publication of application: **15.10.2008**
(21) Application number: 07707491.2
(22) Date of filing: 26.01.2007
(51) Int. Cl.: H04B 7/26, H04L 12/28, H04Q 7/38

(54) **MOBILE COMMUNICATION SYSTEM, BASE STATION DEVICE, AND MOBILE COMMUNICATION METHOD**

(30) Priority: 27.01.2006 JP 2006019231
(71) Applicant: Kyocera Corporation, Kyoto-shi, Kyoto 612-8501 (JP)
(72) Inventor: TAKENAKA, Tetsuya, Yokohama-shi, Kanagawa 224-8502 (JP)
(74) Representative: Pisani, Diana Jean
(86) International application number: PCT/JP2007/051259
(87) International publication number: WO 2007/086503

(57) **Abstract**

In a mobile communication system including a plurality of communication terminals each equipped with a wireless communication device for performing wireless communication between the local station and the secondary station and a base station apparatus wirelessly connected to the plurality of communication terminals, the communication terminal comprises identification information regarding the local station and the secondary station, with which wireless communication can be performed, to the base station apparatus, while the base station apparatus comprises a receiving device for receiving the identification information, a interlinking device for interlinking communication packets for the plurality of communication terminals in accordance with a communication method adapted to the communication terminal and the received identification information, a selecting device for selecting the communication terminal corresponding to a transmission destination of the interlinked communication packets based on information representing communication conditions of the plurality of communication terminals, and a transmitting device for transmitting the interlinked packets to the selected communication terminal, wherein the communication terminal is constituted such that the interlinked packets are received, then, at least packets for the secondary station within the received interlinked packets are transferred to the secondary station by the wireless communication device. Thus, it is possible to apparently improve the throughput by effectively using time slots.

## Description

### TECHNICAL FIELD

The present invention relates to mobile communication systems, base stations devices, and mobile communication methods, in which communication terminals existed in communication areas of base stations are used as repeater stations.
The present application claims priority on Japanese Patent Application No. 2006-19231 filed on January 27, 2006, the content of which is incorporated hereby by reference.

### BACKGROUND ART

Conventionally, wireless communication systems (e.g. CDMA2000 1XEV-DO, etc.) which control communication speeds (hereinafter, referred to as "downlink communication speeds") adapted to downlink communication information to be varied in response to reception conditions of communication terminals have been known. This wireless communication system realizes a tradeoff between the downlink communication speed and the error resistance by way of multiple modulation methods, spread ratios, and the like; hence, it is the wireless communication system that can provide high communication speed in response to the reception condition of a communication terminal. In this wireless communication system, the communication terminal measures the quality of received signals (Carrier-to-Interference Ratio CIR) from the base station so as to request the base station to provide the maximum downlink communication speed, which is predicted to ensure reception of data under a prescribed error rate. Upon reception of requests of downlink communication speeds from multiple communication terminals, the base station performs scheduling on respective requests so as to determine the communication terminal, which is a transmission destination of downlink communication information, and to perform communication with it. The scheduling for the determination of the transmission destination is based on optional methods defined by communication facilities; generally, it is based on a scheduling algorithm called proportional fairness.

This scheduling is a method establishing a good balance between the fairness of communication speeds adapted to multiple communication terminals and the maximization of the total throughput in the base station. In this scheduling, an average communication value R in the past (generally, an average value within one second in the past by use of the moving average or logarithmic window average with respect to each communication terminal) is calculated with respect to each communication terminal, so that the downlink communication information is assigned to the communication terminal having the maximum ratio of DRC/R, i.e., the request of downlink communication speed (DRC) to the average communication value R (see Patent Document 1, for example). In the wireless communication system in which the communication terminal performs communication with the base station, when the communication terminal performs transmission based on the reception condition thereof in connection with the base station, the communication terminal sets up the transmission output, then, the transmission output of the communication terminal is controlled by the base station.
As the wireless communication system in which the communication terminal performs communication with the base station, the communication system, in which communication terminals that exist in the communication area of the base station are used as repeater stations so as to allow the base station to perform communication with communication terminals that exist out of the communication area of the base station, has been known (see Patent Document 2, for example).
Patent Document 1: Japanese Unexamined Patent Application Publication No. 2002-171287
Patent Document 2: Japanese Unexamined Patent Application Publication No. 2003-309512

### DISCLOSURE OF THE INVENTION

### MEANS FOR SOLVING THE PROBLEM

Since TDMA is used in the downlink transmission based on CDMA2000 1XEV-DO in order to improve the overall throughput of the base station, downlink time slots are assigned to the communication terminal having the maximum DRC/R among communication terminals by use of a scheduler. Therefore, a single time slot should be occupied by each communication terminal during transmission of small packets such as VoIP (Voice over IP). In CDMA2000 1XEV-DO, the number of bits which the communication terminal of 2.4 Mbps throughput can transmit in one time slot is 4 kilobit. However, when the communication terminal uses VoIP in the frame of 32 kbps and 20 ms, only 640 bits are used in one slot while remaining 3360 bits are not used; hence, there is a problem in that a waste occurs.
Since specific time slots are assigned to users irrespective of sizes of packets, the number of time slots assigned to the local communication terminal decreases as the number of users increases; as a result, delay should be increased. There is another problem in that the throughputs of other communication terminals (e.g. communication terminals performing data communications) other than the communication terminal using VoIP must be reduced.

The present invention is made in consideration of the aforementioned circumstances; hence, it is an object of the present invention to provide a mobile communication system, a base station device, and a mobile communication method, which can apparently improve the throughput by effectively using time slots.

The present invention is directed to a mobile communication system comprising a plurality of communication terminals each equipped with a wireless communication means for performing wireless communication between a local station and a secondary station and a base station device wirelessly connected to the plurality of communication terminals and is characterized in that the communication terminal includes an identification information transmission means for transmitting identification information regarding the local station and the secondary station, with which wireless communication is performed by the wireless communication means, to the base station device, while the base station device includes an identification information reception means for receiving the identification information, an interlink means for interlinking communication packets for the plurality of communication terminals in accordance with a communication method adapted to the communication terminal and the identification information received by the identification information reception means, a selection means for selecting the communication terminal corresponding to a transmission destination of the communication packets interlinked by the interlink means based on information representing communication conditions of the plurality of communication terminals, and an interlinked packet transmission means for transmitting the interlinked packets to the communication terminal selected by the selection means, wherein the communication terminal further includes an interlinked packet reception means for receiving the interlinked packets, and wherein at least packets for the secondary station within the interlinked packets received by the interlinked packet reception means are transferred to the secondary station by use of the wireless communication means.

The present invention is characterized in that the communication method is an audio communication method.

The present invention is characterized in that the interlink means interlinks a prescribed number of packets which can be stored in one time slot.

The present invention is directed to a base station device wirelessly connected to a plurality of communication terminals each equipped with a wireless communication means for performing wireless communication between a local station and a secondary station and is characterized by including an identification information reception means for receiving identification information regarding the local station and the secondary station, with which wireless communication is performed by the wireless communication means, from the communication terminal; an interlink means for interlinking communication packets for the plurality of communication terminals in accordance with a communication method adapted to the communication terminal and the identification information received by the identification information reception means; a selection means for selecting the communication terminal corresponding to a transmission destination of the communication packets interlinked by the interlink means based on information representing communication conditions of the plurality of communication terminals; and an interlinked packet transmission means for transmitting the interlinked packets to the communication terminal selected by the selection means.

The present invention is directed to a mobile communication method adapted to a mobile communication system which includes a plurality of communication terminals each equipped with a wireless communication means for performing wireless communication between a local station and a secondary station and a base station device wirelessly connected to the plurality of communication terminals and is characterized by including a step for transmitting identification information representing the local station and the secondary station, with which wireless communication is performed by the wireless communication means, by the communication terminal, a step for receiving the identification information by the base station device, a step for interlinking communication packets for the plurality of communication terminals in accordance with a communication method adapted to the communication terminal and the identification information received by an identification information reception means, a step for selecting the communication terminal corresponding to a transmission destination of the communication packets interlinked by the interlink means based on information representing communication conditions of the plurality of communication terminals, a step for transmitting the interlinked packets to the communication terminal selected by the selection means, a step for receiving the interlinked packets by the communication terminal, and a step for transferring at least packets for the secondary station within the interlinked packets, which are received, to the secondary station by use of the wireless communication means.

According to the present invention, the base station device interlinks packets for the plurality of communication terminals so as to transmit them in one slot, whereby data for the plurality of communication terminals are incorporated into a region, which is originally filled with padding (blank data), and are transmitted once. This improves the use efficiency of TDMA time slots; hence, it is possible to improve the overall throughput of the system.

### BRIEF DESCRIPTION OF THE DRAWINGS

[FIG. 1] FIG. 1 is a constitutional diagram showing the overall constitution of one embodiment of the present invention.
[FIG. 2] FIG. 2 is a block diagram showing the detailed constitutions of a base station 100 and communication terminals 110 and 120 shown in FIG. 1.
[FIG. 3] FIG. 3 is an explanatory diaphragm showing the configuration of an interlinked packet.
[FIG. 4] FIG. 4 is a flowchart showing the operation of the base station 100 shown in FIG. 2.
[FIG. 5] FIG. 5 is a flowchart showing the operation of the communication terminals 110 and 120.

### DESCRIPTION OF THE REFERENCE NUMERALS

- 100: base station
- 201: reception means
- 202: transmission means
- 203: scheduler
- 204: storage means
- 205: interlink determination means
- 206: header addition means
- 207: interlink means
- 211, 221: reception means
- 212, 222: transmission means
- 213, 223: decoding means
- 214, 224: transfer information determination means
- 215, 225: direct communication means

### BEST MODE FOR CARRYING OUT THE INVENTION

Hereinafter, a mobile communication system according to one embodiment of the present invention will be described with reference to the accompanying drawings.

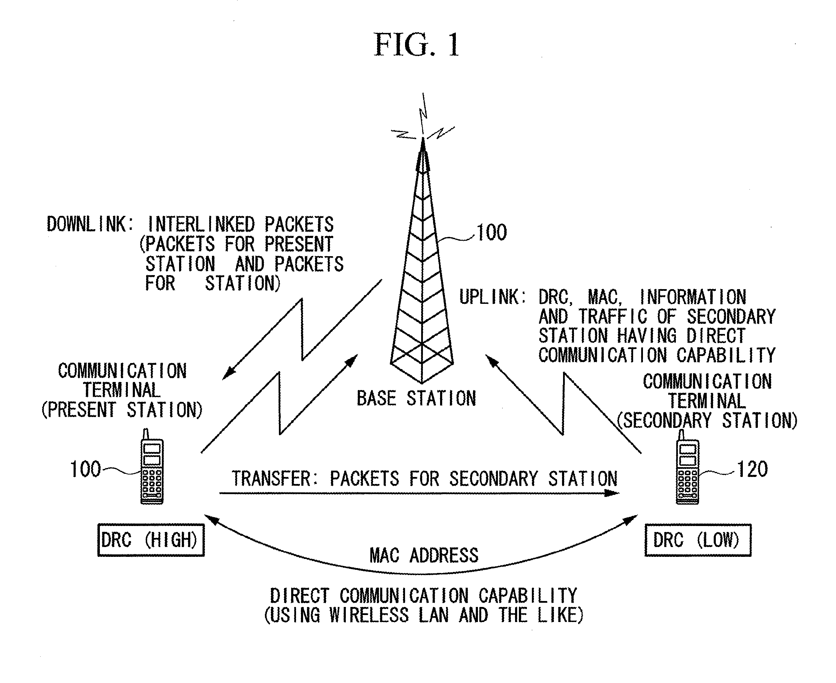

FIG. 1 is a constitutional diagram showing the overall constitution of the present embodiment. In this figure, reference numeral 100 designates a base station that establishes wireless communication between a local communication terminal 100 and a secondary communication terminal 120 based on CDMA2000 1XEV-DO. Herein, the local communication terminal 110 and the secondary communication terminal 120 perform data communication using small packet sizes (e.g. VoIP). The communication terminals 110 and 120 are capable of directly communicating information therebetween via a wireless LAN and the like without intervention of the base station 100. As the direct communication means adapted to the two communication terminals 110 and 120, it is possible to use Bluetooth, UWB (Ultra Wide Band), and the like other than the wireless LAN, whereas the wireless LAN can be preferably used as the direct communication means adapted to communication terminals because the delay time of the wireless LAN is approximately 4 ms, which is very small compared with the delay time of CDMA2000 1XEV-DO ranging from 100 ms to several hundreds of milliseconds. When the communication terminals 110 and 120 directly communicate information therebetween using small packet sizes, the base station 100 interlinks packets towards the communication terminal 110 and packets towards the communication terminal 120 so as to transmit interlinked packets to the communication terminal 110. The following description is made in the precondition that the local communication terminal 110 serves as a repeater station, whereas the terminal having the highest DRC (i.e. the terminal having a good reception status) within the destinations for interlinked packets is selected as the communication terminal serving as the repeater station. Therefore, when the communication terminal 120 has a high DRC, the communication terminal 120 serves as the repeater station (or local station), so that the communication terminal 110 serves as the secondary communication terminal.

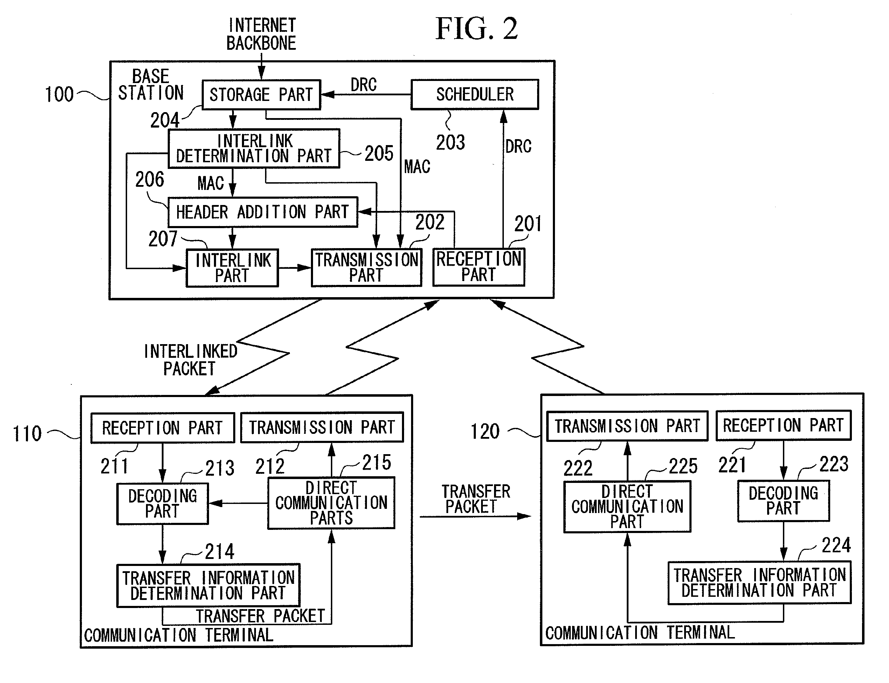

Next, the detailed constitutions of the base station 100 and the communication terminals 110 and 120 shown in FIG. 1 will be described with reference to FIG. 2. FIG. 2 is a block diagram showing the constitutions of the base station 100 and the communication terminals 110 and 120 shown in FIG. 1.
In this figure, reference numeral 201 designates a reception part that receives DRC and MAC addresses from the communication terminals 110 and 120 as well as MAC addresses of other communication terminals each having a direction communication capability with the foregoing communication terminals. Reference numeral 202 designates a transmission part that transmits normal packets or interlinked packets to the communication terminals 110 and 120. Reference numeral 203 designates a scheduler that specifies a communication terminal having the highest value of DRC/R based on DRC and MAC addresses of the foregoing communication terminals, thus assigning downlink slots to the communication terminal. Herein, the value R which is necessary to calculate DRC/R is an average communication value among one-thousand slots in the past with respect to the foregoing communication terminals. Reference numeral 204 designates a storage part for storing data which should be transmitted to the foregoing communication terminals. Reference numeral 205 designates an interlink determination part that determines whether or not packets for one communication terminal (local station) can be interlinked with packets for communication terminals of other stations, wherein when it determines that they can be interlinked together, it selects the communication terminal having the best DRC as the destination (repeater station) within multiple communication terminals ensuring interlinking of packets. Reference numeral 206 designates a header addition part for adding headers such as MAC addresses of communication terminals to packets for communication terminals of other stations. Reference numeral 207 designates an interlink part that interlinks packets added with headers by the header addition part 206 with packets for the communication terminal, which is selected as the destination by the interlink determination part 205, thus sending them to the transmission part.

Reference numerals 215 and 225 designate direct communication parts that directly communicate information to other communication terminals, which exist in proximity to the local communication terminal, and that is configured by a wireless LAN. Reference numerals 212 and 222 designate transmission parts that add MAC addresses of other communication terminals, which can perform direct communication using the direct communication parts 212 and 222, to the DRC and MAC address of the local communication terminal, thus transmitting them to the base station 100. Reference numerals 211 and 221 designate reception parts that receive information from the base station 100. Reference numerals 213 and 223 designate decoding parts that decode received information. Reference numerals 214 and 224 designate transfer information determination parts that determine whether or not the decoded information include transfer packets for other communication terminals, wherein when transfer packets are included, they are forwarded to the direct communication parts 215 and 225.

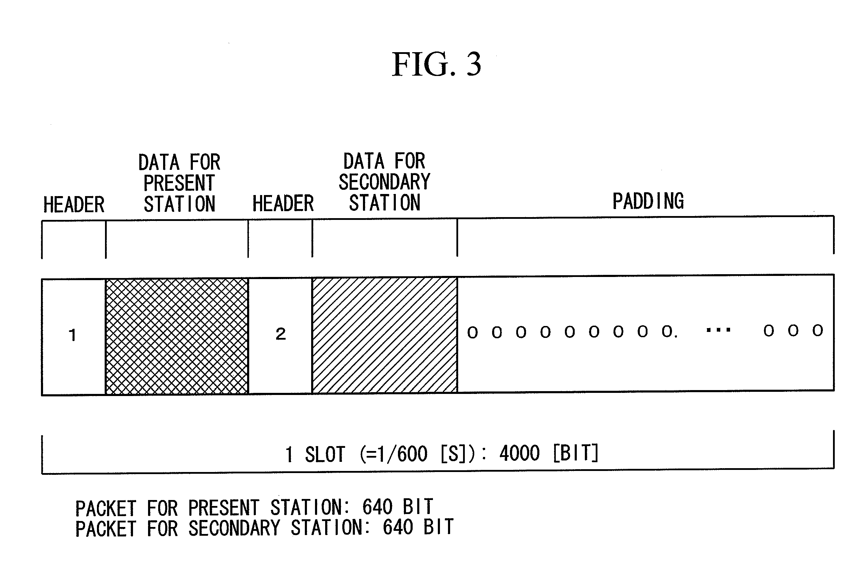

Next, the configuration of an interlinked packet generated by the base station 100 will be described with reference to FIG. 3. Herein, the local communication terminal 110 has a good communication condition and is thus capable of performing communication at 2.4 Mbps, wherein one slot (1/600 [S]) ensures transmission of information of 4000 bits, and wherein the local communication terminal 110 and the secondary communication terminal 120 perform VoIP communication using frames of 32 kbps and 20 ms. An interlinked packet for one slot is formed by interlinking multiple sets of headers and data for communication terminals. FIG. 3 shows an example of the interlinked packet in which data for the local communication terminal 110 (i.e. data whose header is "1") are interlinked with data for the secondary communication terminal 120 (i.e. data whose header is "2") and in which remaining fields are filled with padding of "0". This example shows that the base station 100 interlinks two packets, whereas the base station 100 can interlink three or more packets. That is, the number of packets interlinked together by the base station 100 can be set to arbitrary number as long as the base station 100 can store the interlinked packet in one slot.

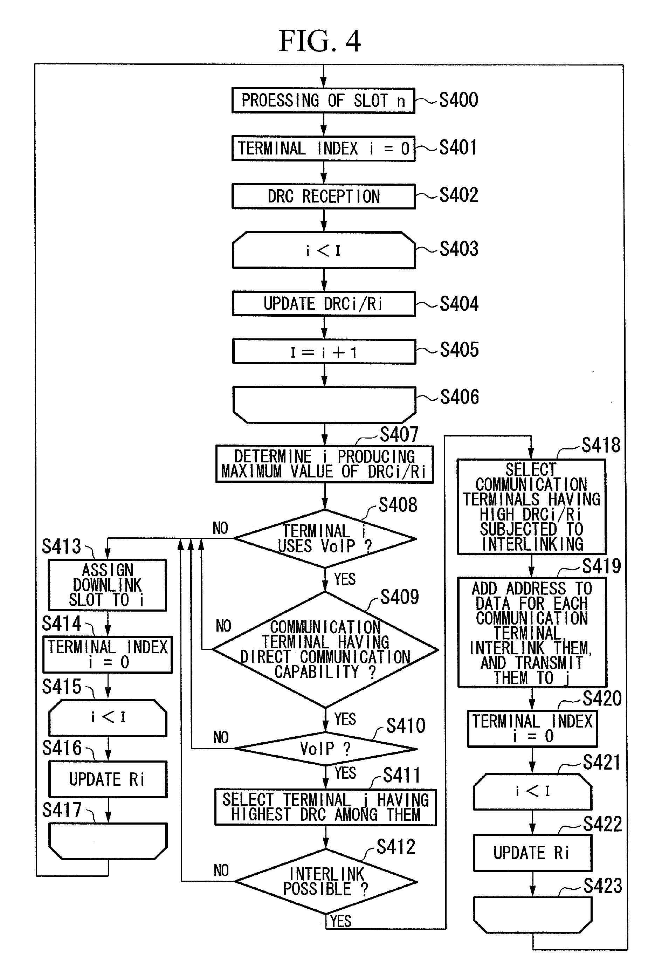

Next, the operation of the base station 100 shown in FIG. 2 will be described with reference to FIG. 4. First, when the base station 100 starts processing slot n (step S400), the base station 100 initializes Index of the communication terminal to "0" (step S401); then, the reception part 201 receives DRC values from multiple communication terminals presently belonging to the base station 100 (step S402) so as to notify the scheduler 203 of the received DRC values. The scheduler 203 updates DRC/R values of all communication terminals based on the DRC values of multiple communication terminals notified by the reception part 201 (steps S403 to S406). Then, the scheduler 203 determines the communication terminal having the maximum DRC/R value (step S4007). Thus, the interlink determination part 205 determines whether or not packets for the communication terminal determined by the scheduler 203 are very small similar to VoIP packets so that they can be interlinked with packets (data) for other communication terminals (step S408). When the determination result indicates that they cannot be interlinked with packets for other communication terminals, the base station 100 assigns downlink slots to the presently selected communication terminal (S413). Then, it initializes the Index of the communication terminal to "0" (step S414); thereafter, it updates R corresponding to the average communication value in 1000 slots in the past (steps S415 to S417) with respect to all communication terminals; then, the flow returns to step S400 so as to perform processing on slot n+1.

When it is determined in step S408 that packets for the communication terminal determined by the scheduler 203 can be interlinked with packets for other communication terminals, the base station 100 determines whether or not there exists a communication terminal having direct communication capability with the presently selected communication terminal (step S409). When the determination result indicates that no communication terminal having direct communication capability exists, the base station 100 assigns downlink slots to the presently selected communication terminal (step S413).

Next, when it is determined that there exists a communication terminal having direct communication capability with the presently selected communication terminal, the interlink determination part 205 determines whether or not packets for the communication terminal having direct communication capability are very small and similar to VoIP packets so that packets for the communication terminal determined by the scheduler 203 can be interlinked with packets for the communication terminal having direct communication capability (step S410). When the determination result indicates that they cannot be interlinked with packets for the communication terminal having direct communication capability, the base station 100 assigns downlink slots to the presently selected communication terminal (step S413). When it is determined that packets for the communication terminal determined by the scheduler 203 can be interlinked with packets for the communication terminal having direct communication capability, the interlink determination part 205 selects a communication terminal having the highest DRC value within the communication terminals corresponding to the destinations of interlinked packets, so that the selected communication terminal is set to a new destination (step S411). Subsequently, it is determined whether or not packets for the communication terminal having direct communication capability can be interlinked (step S412); then, when the determination result indicates that no communication terminal having direct communication capability exists, the base station 100 assigns downlink slots to the presently selected communication terminal (step S413).

Next, when it is determined in step S412 that packets for the communication terminal having direct communication capability can be interlinked, the interlink determination part 205 selects as many as possible communication terminals whose packets can be interlinked in the order of higher DRC/R values (step S418). The interlink part 207 adds addresses to packets for selected communication terminals, which are then interlinked together; thereafter, the transmission part 202 transmits interlinked packets to the communication terminal having the highest DRC value (step S419). The base station 100 initializes the Index of the communication terminal to "0" (step S421); then, it updates R corresponding to the average communication value in 1000 slots in the past with respect to all communication terminals (steps S421 to S423). When updating R, the base station 100 calculates R by adding communication values with regard to each destination of interlinked packets subjected to transmission so that no inconvenience occurs wit respect to the communication terminal repeating packets for other communication terminals. Then, the flow returns to step S400, so that the base station 100 performs processing on slot n+1.

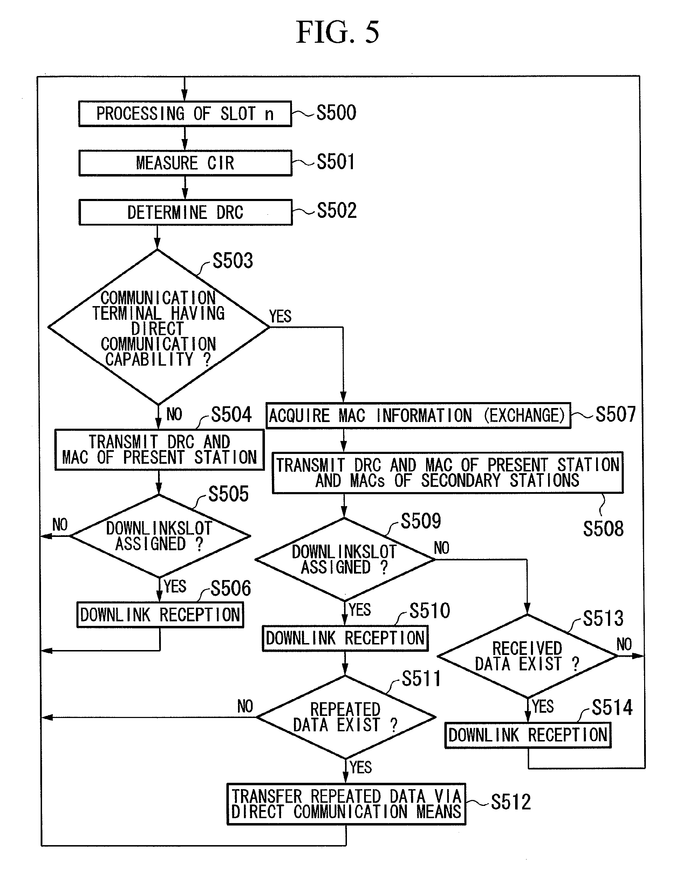

Next, the operation of the communication terminals 110 and 120 sown in FIG. 2 will be described with reference to FIG. 5. When the communication terminal starts processing slot n (step S500), it receives a downlink pilot signal from the base station 100 so as to measure the reception condition (CIR) (step S501), thus determining the receivable downlink speed (DRC) (step S502). The transfer information determination part 214 makes a determination based on the reception condition of the direction communication part 215 as to whether or not there exists a communication terminal having direct communication capability in proximity to the communication terminal thereof (step S503). When the determination result indicates that no communication terminal having direct communication capability exists, the communication terminal 110 transmits the DRC and MAC address thereof to the base station 100 via the transmission part 212 (step S504). Subsequently, the communication terminal 110 determines whether or not the base station 100 assigns downlink slots thereto (step S505). When downlink slots are assigned, the reception part 211 receives packets (step S506), then, the communication terminal proceeds to the processing of slot n+1 (step S500).

Next, when it is determined in step S503 that there exists a communication terminal having direct communication capability in proximity the communication terminal, the local communication terminal (i.e. the communication terminal 110) acquires the MAC address of the secondary communication terminal (i.e. the communication terminal 120) via the direct communication part 215 (step S507); then, it adds the MAC addresses of all other communication terminals each having direction communication capability to the DRC and MAC address of the local communication terminal so as to send them to the base station 100 via the transmission part 212 (step S508). The communication terminal determines whether or not the base station 100 assigns downlink slots thereto (step S509), wherein when downlink slots are assigned thereto, the reception part 211 receives packets transmitted from the base station 100 (step S510). Upon reception of them, the transfer information determination part 214 determines whether or not received packets include transfer data (step S511), wherein when they include transfer data, the direct communication part 215 transfer the transfer data to the secondary communication terminal (step S512), then the communication terminal proceeds to the processing of slot n+1 (step S500), whereas when they do not include transfer data, it directly proceeds to the processing of slot n+1 (step S500).

When the communication terminal determines in step S509 that no downlink slot is assigned thereto, the direct communication part 215 determines whether or not there exist packets for the communication terminal thereof (i.e. packets to be received from the secondary communication terminal) (step S513). When the determination result indicates that there exist packets for the communication terminal, the direct communication part 215 receives data for the communication terminal thereof (step S514), then, the communication terminal proceeds to the processing of slot n+1 (step S500), whereas when there exists no packet for the communication terminal, the communication terminal directly proceeds to the processing of slot n+1 (step S500).

Since as many as possible packets for other communication terminals are interlinked, the padding value of each slot is reduced so as to improve the throughput. Originally, two communication terminals must perform communications by occupying two slots, whereas the present embodiment is capable of transmitting packets for two communication terminals during transmission using a single slot; hence, it is possible to reduce delay times in communications with other communication terminals. Since the present embodiment can increase the frequency of assigning slots to other communication terminals each not having direct communication capability, it is possible to improve the overall throughput in the communication system.

The aforementioned description is given with respect to interlinking of small-size packets such as VoIP packets. Herein, only the communication terminal, which transmits packets including large amounts of "0" padding (or padding values) (i.e. packets each having a large vacancy in one slot), whereas packets repeated by other communication terminals towards the prescribed communication terminal can be set to any size ensuring interlinking and are not necessarily set to small sizes. That is, the communication terminal having a good communication condition for transmitting small-size packets serves as a repeater station so that it can interlink a large number of packets compared with other communication terminals.

As described above, when time-division transmission is performed from the base station to the communication terminals which can mutually perform direct communication therebetween, and when two or more communication terminals each having direct communication capability are used to transmit small-size packets, the base station interlinks packets for these communication terminals so as to transmit one packet via one time slot to the communication terminal having the best communication condition within the destinations of interlinked packets; then, the communication terminal transfers the received packets to other communication terminals; thus, it is possible to improve the throughput.

Since as many as possible multiple packets are interlinked together in one slot, it is possible to improve the transmission efficiency of one slot. When the base station selects the communication terminal which is the destination for assigning slots, and when the average communication value is calculated by use of the proportional fairness algorithm, it is calculated by adding only the communication value of the received packets for the communication terminal, while it is calculated by adding the communication value of received packets for the secondary communication terminal, which receives data by use of the direct communication part, as well; hence, it is possible to ensure fairness with respect to the assignment of slots.

In this connection, the communication terminal of the present invention embraces portable telephones using mobile communications, portable information terminals (PDA) having mobile communication functions, mobile terminals, and car navigation devices.

Programs implementing functions of processing shown in FIG. 1 are stored in computer-readable storage media, so that the computer system loads programs stored in storage media so as to execute them, thus achieving the packet interlinking process and the transmission process of interlinked packets. Herein, the term "computer system" may embrace the OS and the hardware such as peripheral devices. The term "computer-readable storage media" may designate portable media such as flexible disks, magneto-optical disks, ROM, and CR-ROM as well as storage devices such as hard disks incorporated in the computer system. In addition, the term "computer-readable storage media" may embrace storages capable of retaining programs for prescribed time periods such as nonvolatile memories incorporated in the computer system serving as the server and client which programs are transmitted to via networks such as the Internet and communication lines such as telephone lines.

The aforementioned programs can be transferred from the computer system whose storage device stores programs via transmission media, or they can be transferred to another computer system via carrier waves in transmission media. Herein, the term "transmission media" designate media having functions for transmitting information, e.g. networks (communication networks) such as the Internet and communication lines such as telephone lies. The aforementioned programs can be drafted to achieve a part of the foregoing functions. Alternatively, they can be drafted as differential files (or differential programs), which can be combined with pre-installed programs of the computer system.

### INDUSTRIAL APPLICABILITY

According to the present invention, it is possible to improve the use efficiency of TDMA time slots, and it is therefore possible to improve the overall throughput of the system.

## Claims

1. A mobile communication system comprising a plurality of communication terminals each equipped with a wireless communication device for performing wireless communication between a local station and a secondary station, and a base station apparatus wirelessly connected to the plurality of communication terminals,
wherein the communication terminal comprises an identification information transmission device for transmitting identification information regarding the local station and the secondary station, with which wireless communication is performed by the wireless communication device, to the base station apparatus, and
the base station apparatus comprises an identification information receiving device for receiving the identification information,
an interlinking device for interlinking communication packets for the plurality of communication terminals in accordance with a communication method adapted to the communication terminal and the identification information received by the identification information receiving device,
a selecting device for selecting the communication terminal corresponding to a transmission destination of the communication packets interlinked by the interlinking device based on information representing communication conditions of the plurality of communication terminals, and
an interlinked packet transmitting device for transmitting the interlinked packets to the communication terminal selected by the selecting device,
wherein the communication terminal further comprises an interlinked packet receiving device for receiving the interlinked packets, and
wherein at least packets for the secondary station within the interlinked packets received by the interlinked packet receiving device are transferred to the secondary station by use of the wireless communication device.

2. A mobile communication system according to claim 1, wherein the communication method is an audio communication method.

3. A mobile communication system according to claim 1, wherein the interlinking device interlinks a prescribed number of packets which can be stored in one time slot.

4. A base station apparatus wirelessly connected to a plurality of communication terminals each equipped with a wireless communication device for performing wireless communication between a local station and a secondary station, the base station apparatus comprising:
an identification information receiving device for receiving identification information regarding the local station and the secondary station, with which wireless communication is performed by the wireless communication device, from the communication terminal;
an interlinking device for interlinking communication packets for the plurality of communication terminals in accordance with a communication method adapted to the communication terminal and the identification information received by the identification information receiving device;
a selecting device for selecting the communication terminal corresponding to a transmission destination of the communication packets interlinked by the interlinking device based on information representing communication conditions of the plurality of communication terminals; and
an interlinked packet transmitting device for transmitting the interlinked packets to the communication terminal selected by the selecting device.

5. A mobile communication method adapted to a mobile communication system which comprises a plurality of communication terminals each equipped with a wireless communication device for performing wireless communication between a local station and a secondary station and a base station apparatus wirelessly connected to the plurality of communication terminals, the mobile communication method comprising:
transmitting identification information representing the local station and the secondary station, with which wireless communication can be performed by the wireless communication device, by the communication terminal;
receiving the identification information by the base station apparatus;
interlinking communication packets for the plurality of communication terminals in accordance with a communication method adapted to the communication terminal and the identification information received by an identification information receiving device;
selecting the communication terminal corresponding to a transmission destination of the communication packets interlinked by the interlinking device based on information representing communication conditions of the plurality of communication terminals;
transmitting the interlinked packets to the communication terminal selected by the selecting device;
receiving the interlinked packets by the communication terminal; and
transferring at least packets for the secondary station within the interlinked packets, which are received, to the secondary station by use of the wireless communication device.
